(19) Europäisches Patentamt
European Patent Office
Office européen des brevets

(11) **EP 3 577 262 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(51) Int Cl.:
***D02G 3/48*** *(2006.01)*   ***B60C 9/00*** *(2006.01)*

(21) Anmeldenummer: **17835831.3**

(22) Anmeldetag: **19.12.2017**

(86) Internationale Anmeldenummer:
**PCT/EP2017/083413**

(87) Internationale Veröffentlichungsnummer:
**WO 2018/141453 (09.08.2018 Gazette 2018/32)**

(54) **POLYAMID-KORD ZUR VERWENDUNG ALS KARKASS-FESTIGKEITSTRÄGER UND FAHRZEUGLUFTREIFEN UMFASSEND EINEN ODER MEHRERE POLYAMID-KORDE**

POLYAMIDE CORD FOR USE AS A CARCASS REINFORCEMENT AND PNEUMATIC VEHICLE TIRE COMPRISING ONE OR MORE POLYAMIDE CORDS

CORDE POLYAMIDE DESTINÉE À ÊTRE UTILISÉE COMME RENFORT DE CARCASSE ET PNEU DE VÉHICULE COMPRENANT UNE OU PLUSIEURS CORDES POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2017 DE 102017201631**

(43) Veröffentlichungstag der Anmeldung:
**11.12.2019 Patentblatt 2019/50**

(73) Patentinhaber: **Continental Reifen Deutschland GmbH**
**30165 Hannover (DE)**

(72) Erfinder:
• **MOURA, Tiago**
**30161 Hannover (DE)**
• **KRIEGER, Ralf**
**30559 Hannover (DE)**
• **MÜLLER, Matthias-Stephan**
**30827 Garbsen (DE)**
• **MINX, Carsten**
**31535 Neustadt (DE)**
• **EMDE, Andreas**
**30938 Burgwedel (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A1- 0 448 901   EP-A2- 0 374 356
DE-A1- 2 031 402   DE-A1- 3 614 764

• SOGHRA RAMAZANI, MOHAMMAD MORSHED, MOHAMMAD GHANE: "Effect of service temperature on structure and mechanical properties of polyamide 6 & 66 tyre cords", JOURNAL OF POLYMER RESEARCH, Bd. 18, Nr. 4, Juli 2011 (2011-07), Seiten 781-792, XP002782342, DOI: 10.1007/s10965-010-9475-4

EP 3 577 262 B1

**Beschreibung**

Die Erfindung betrifft einen Polyamid-Kord zur Verwendung als Karkass-Festigkeitsträger in einem Fahrzeugluftreifen und einen Fahrzeugluftreifen umfassend einen oder mehrere Polyamid-Korde.

Festigkeitsträger zur Verstärkung verschiedener elastomerer Erzeugnisse, z.B. einer Verstärkungslage in einem Fahrzeugluftreifen, sind hinreichend bekannt. Sie können bei der Herstellung des Fahrzeugluftreifens einen entscheidenden Beitrag zu verschiedenen Eigenschaften des resultierenden Fahrzeugluftreifens leisten.

Auf dem Markt angebotene Fahrzeugluftreifen unterliegen hohen Qualitätsanforderungen, dazu gehören insbesondere die Anforderungen an die Maße der Fahrzeugluftreifen. Daher dürfen bei der industriellen Großherstellung der Fahrzeugluftreifen keine oder nur wenige Produktionsfehler auftreten, die zu Abweichungen in den geforderten Reifenmaßen führen.

Zu den unerwünschten Abweichungen gehören Unwuchten oder andere Ungleichförmigkeiten in den hergestellten Fahrzeugluftreifen. Durch Reduzierung solcher Abweichungen kann der Anteil an den Fahrzeugluftreifen bei der Reifenherstellung vergrößert werden, welcher den Kundenanforderungen entsprechen. Hierdurch kann die Rohstoffverwertung im Herstellungsprozess gesteigert und somit die Umweltbelastung verringert werden.

Im Stand der Technik sind verschiedene Festigkeitsträger für Verstärkungslagen bekannt: DE 102012108523 A1 offenbart einen "Verstärkungscord für elastomere Erzeugnisse, insbesondere für einen Fahrzeugluftreifen, und Fahrzeugluftreifen" (Bezeichnung). Es wird offenbart, dass ein stabiler Verstärkungscord erhalten wird, wenn "er aus wenigstens einem Garn aus PEF aus vollständig oder zumindest teilweise Biomassen und/oder nachwachsenden Rohstoffen und wenigstens einem Garn aus Rayon" besteht (vgl. Abschnitt [0039]).

Desweiteren offenbart Dokument US 3614864 "two-ply polyamid tire cord" (Titel).

Hierbei werden auch verschiedene Twist-Faktoren (vgl. Tabelle in Spalte 4) offenbart. Außerdem offenbart das Dokument mit der Veröffentlichungsnummer US 2011/0056607 A1 einen "Heavy duty pneumatic tire" (Titel).

Das Dokument EP 2394822 A1 offenbart u.a. Reifen mit Zickzack-Gürtelverstärkungsstruktur, insbesondere für Flugzeugreifen mit reduziertem Gewicht" (Titel). Es wird eine Radialkarkassenlage-Kordfaser aus Nylon offenbart (vgl. Abschnitt [0017]) EP-A-0 374 356 offenbart ein Monofilament aus einem orientierten thermoplastischen Polymer, das einen länglichen Querschnitt mit einem Breite-Dicke-Verhältnis bei dem Monofilament von mehr als 2.0 aufweist. Rundliche Monofilamente aus Polyhexamethylenadipamid weisen eine Schrumpfung zwischen 3.7 - 4.8% auf. EP-A-0 448 901 offenbart einen Flugzeugdiagonalluftreifen worin die Karkassenlagen und die Brecherlagen im wesentlichen parallele Fasern umfassen, wobei die Fasern, welche die Karkassenlagen verstärken, Nylonmonofilamente sind mit einer Zähigkeit von zumindest 53 cN/tex (6 g/den), einem Initialmodul von zumindest 309 cN/tex (35 g/den), und einer Schrumpfung, welche nicht größer als 5% ist. Die wissenschaftliche Veröffentlichung von Soghra Ramazani, Mohammad Morshed und Mohammad Ghane ("Effect of service temperature on structure and mechanical properties of polyamide 6 & 66 tyre cords", Journal of Polymer Research, Bd 18, Nr 4, Juli 2011, Seiten 781-792) untersucht wissenschaftlich die Wirkung der Betriebstemperatur auf die chemische Struktur und die mechanischen Eigenschaften von Reifenkorden aus Polyamid 6 & 66 sowie die Zugfestigkeit bei Hitzebehandlung und den Grad des Kristallinitätsanstiegs des Reifenkords, wobei gefunden wurde, dass ein Reifenkord spröde werden und somit an Bruchlast und Dehnung verlieren kann.

Der vorliegenden Erfindung liegt nun die Aufgabe zugrunde, einen Polyamid-Kord zur Verwendung als Karkass-Festigkeitsträger in einem Fahrzeugluftreifen bereitzustellen, welcher durch seine Verwendung als Karkass-Festigkeitsträger in einem Fahrzeugluftreifens dazu führt, dass der resultierende Fahrzeugluftreifen die Umwelt weniger belastet als ein aus dem Stand der Technik bekannter Fahrzeugluftreifen. Gleichzeitig war es eine weitere Aufgabe der vorliegenden Erfindung, einen Polyamid-Kord zur Verwendung in einem Fahrzeugluftreifen bereitzustellen, welcher die Lebensdauer des den Polyamid-Kord umfassenden Fahrzeugluftreifens im Vergleich zu der Lebensdauer eines aus dem Stand der Technik bekannten Fahrzeugluftreifen zu verlängern.

Gelöst wird diese Aufgabe erfindungsgemäß in Bezug auf den Polyamid-Kord dadurch, dass der Polyamid-Kord eine Restschrumpfung im Bereich von 0 bis 2 % und eine Schrumpfung bei 180 °C im Bereich von 0 bis 4,5 % aufweist, wobei die Restschrumpfung des Polyamid-Kords und die Schrumpfung bei 180°C des Polyamid-Kords nach ASTM D 885 bestimmt sind, und dass der Polyamid-Kord einen Twist-Faktor im Bereich von 190 bis 250 aufweist.

Die vorstehende Aufgabe wird erfindungsgemäß durch den vorstehend beschriebenen Polyamid-Kord gelöst, indem die Restschrumpfung und die Schrumpfung bei 180 °C des Polyamid-Kords in den jeweiligen vorstehend beschriebenen Bereich eingestellt werden. Überraschenderweise wurde festgestellt, dass Fahrzeugluftreifen, welche mit Hilfe des erfindungsgemäßen Polyamid-Kords hergestellt wurden, nicht nur eine im Vergleich zu den aus dem Stand der Technik bekannten Fahrzeugluftreifen besonders hohe Reifengleichförmigkeit aufweisen, sondern häufiger als aus dem Stand der Technik bekannte Fahrzeugluftreifen eine Reifengleichförmigkeit aufweisen, die den Kundenanforderungen entspricht. Gemäß beispielhafter Kundenanforderung darf die Abweichung des ermittelten geometrischen Mittelpunktes der Laufflächenkontur des hergestellten Fahrzeugluftreifens von dem Mittelpunkt des Wulstkreises der ersten radialen Harmonischen nur um 1,25 mm abweichen. Bei im Stand der Technik bekannten Herstellungsprozessen liegt der Anteil der hergestellten Fahrzeugluftreifen, die diesem Kriterium nicht entsprechen, zwischen 10% bis 30% der Gesamtheit der hergestellten Fahrzeugluftreifen. Dieser Anteil der Fahrzeugluftreifen kann daher nicht in einen sensiblen Einsatz verkauft werden und wird daher häufig unbenutzt verworfen. Durch die Verwendung eines erfindungsgemäßen Polyamid-Kords wie vorstehend beschrieben haben mehr als 90% der hergestellten Fahrzeugluftreifen eine Abweichung des ermittelten geometrischen Mittelpunktes der Lauffächenkontur des hergestellten Fahrzeugluftreifens von dem Mittelpunkt des Wulstkreises der ersten radialen Harmonischen von weniger als 1,25 mm. Somit werden die Produktionskosten der resultierenden erfindungsgemäßen Fahrzeugluftreifen sowie daraus resultierend die Umweltbelastung durch die Herstellung verringert. Darüber hinaus weisen erfindungsgemäße Fahrzeugluftreifen durch ihre höhere Gleichförmigkeit auch einen geringeren Kraftstoffverbrauch als im Stand der Technik bekannte Fahrzeugluftreifen auf. Dies führt zusätzlich zu einer zusätzlichen Verringerung der Umweltbelastung von erfindungsgemäßen Fahrzeugluftreifen.

Ein weiterer Vorteil der Erfindung ist, dass durch die Einstellung der Restschrumpfung und der Schrumpfung bei 180°C in die vorstehend definierten Bereiche ein erfindungsgemäßer Polyamid-Kord entsteht, der zudem eine höhere Bruchdehnung als im Stand der Technik bekannte Polyamid-Korde aufweist. Daher ist ein erfindungsgemäßer Polyamid-Kord insbesondere für Fahrzeuge mit schweren Lasten vorteilhaft, wie zum Beispiel für Van-, LKW- oder Landwirtschaftsluftreifen.

Ein weiterer Vorteil der Erfindung ist, dass ein einen erfindungsgemäßen Polyamid-Kord umfassender Fahrzeugluftreifen aufgrund des vorstehend beschriebenen optimierten Schrumpfungsverhaltens ein verringertes "Flat-Spotting" aufweist, da die in einem Fahrzeugluftreifen auftretenden wechselnden Umgebungsbedingungen einen erfindungsgemäßen Polyamid-Kord weniger beeinflussen als Fahrzeugluftreifen mit im Stand der Technik bekannten Korden. Dies führt auch zu einer längeren Lebensdauer eines Fahrzeugluftreifens mit einem erfindungsgemäßen Polyamid-Kord als Karkass-Festigkeitsträger.

Ein weiterer Gegenstand der vorliegenden Erfindung ist ein Polyamid-Kord wie vorstehend beschrieben in einer gummierten Verstärkungslage eines Fahrzeugluftreifens sowie ein Polyamid-Kord wie vorstehend beschrieben in einer Karkassenlage eines Fahrzeugluftreifens. Dies gilt für sämtliche nachstehend beschriebene Aspekte der vorliegenden Erfindung.

Der Polyamid-Kord weist einen Twist-Faktor im Bereich von 190 bis 250 auf, bevorzugt im Bereich von 190 bis 230, besonders bevorzugt im Bereich von 190 bis 210, ganz besonders bevorzugt im Bereich von 200 bis 210.

Im Rahmen eigener Untersuchung von erfindungsgemäßen Polyamid-Korden mit unterschiedlichen Twist-Faktoren wurde festgestellt, dass eine deutlich höhere

Lebensdauer der Fahrzeugluftreifen mit diesen erfindungsgemäßen Polyamid-Kord erreicht werde kann im Vergleich zu Fahrzeugluftreifen, bei denen der Twist-Faktor außerhalb der vorstehend definierten Bereichen liegt. Zudem wurde überraschenderweise nur eine leichte Erhöhung der Restschrumpfung und der Schrumpfung bei 180 °C festgestellt. Dies ist deshalb überraschend, da bei im Stand der Technik bekannten Polyamid-Korden mit einem Twist-Faktor in den vorstehend genannten Bereichen die Restschrumpfung stets höher als 3 % und die Schrumpfung bei 180°C stets höher als 6 % ist und somit weisen Fahrzeugluftreifen mit diesen Polyamid-Korden eine geringere Reifengleichförmigkeit auf. Es war daher nicht zu erwarten, dass ein Polyamid-Kord mit einem Twist-Faktor in den vorstehend genannten Bereichen und gleichzeitig mit einer Restschrumpfung und einer Schrumpfung bei 180 °C wie vorstehend beschrieben hergestellt werden kann.

Der vorstehend als bevorzugt beschriebene erfindungsgemäße Polyamid-Kord führt daher bei Verwendung als Karkass-Festigkeitsträger in einem Fahrzeugluftreifen dazu, dass im Vergleich zu einem im Stand der Technik bekannten Fahrzeugluftreifen der erfindungsgemäße Fahrzeugluftreifen eine längere Lebensdauer und gleichzeitig trotz des hohen Twist-Faktors keine signifikant höhere Restschrumpfung bzw. Schrumpfung bei 180 °C aufweist. Sowohl die verlängerte Lebensdauer als auch die erhöhte Reifengleichförmigkeit führen wie weiter oben beschrieben zu einer geringeren Umweltbelastung durch den resultierenden erfindungsgemäßen Fahrzeugluftreifen.

Im Rahmen der vorliegenden Erfindung wird der Twist-Faktor wie folgt definiert:

$$T_F = N_{Garndrehung} \cdot \sqrt[2]{\frac{N_{Garne} \cdot M_{Garnfeinheit}}{k_{dtex}}} \qquad \text{(Gleichung 1)}$$

wobei $N_{Garndrehung}$ = Anzahl Drehungen der Garne umeinander pro Meter Kord [tpm],
$N_{Garne}$ = Anzahl der Garne des Kords,
$M_{Garnfeinheit}$ = Masse von 10.000 Meter Garn [dtex]
und
die Konstante $k_{dtex}$ = 10.000

ist.

Der Fachmann weiß, wie er die Variablen der Gleichung 1 (das sind $N_{Garndrehung}$, $N_{Garne}$ und $M_{Garnfeinheit}$) bei einem beliebigen Polyamid-Kord bestimmen kann.

Bevorzugt ist ein Polyamid-Kord wie vorstehend beschrieben, dadurch gekennzeichnet, dass der Polyamid-Kord eine Gesamtfeinheit im Bereich von 940 dtex bis 6000 dtex aufweist, bevorzugt im Bereich von 1500 dtex bis 4000 dtex, besonders bevorzugt im Bereich von 2500 dtex bis 4000 dtex, besonders bevorzugt im Bereich von 3000 dtex bis 4000 dtex.

Die Gesamtfeinheit eines Kords ist im Rahmen der vorliegenden Erfindung das mathematische Produkt aus Anzahl der zum Kord verdrehten Garne und der Garnfeinheit der zum Kord verdrehten Garne (normalerweise in dtex angegeben).

Ein Vorteil des vorstehend beschriebenen Aspektes der Erfindung ist, dass die resultierenden Fahrzeugluftreifen, welche als Karkass-Festigkeitsträger einen bevorzugten Polyamid-Kord mit einer Gesamtfeinheit wie vorstehend beschrieben umfassen, eine höhere Reifengleichförmigkeit aufweisen als Fahrzeugluftreifen, bei denen der Polyamid-Kord eine andere Gesamtfeinheit aufweist. Gleichzeitig wird der Garnverbrauch optimiert. Darüber hinaus haben erfindungsgemäße bevorzugte Polyamid-Kord wie vorstehend beschrieben eine bessere Bruchdehnung und Zugfestigkeit als aus dem Stand der Technik bekannte Korde.

Bevorzugt ist ein Polyamid-Kord wie vorstehend beschrieben, dadurch gekennzeichnet, dass der Polyamid-Kord aus zwei, drei, vier oder mehr als vier verdrehten Multifilamentgarnen besteht, wobei jedes der Multifilamentgarne bevorzugt einen Garntiter im Bereich von 1000 dtex bis 3000 dtex aufweist, besonders bevorzugt im Bereich von 1400 dtex bis 2000 dtex, ganz besonders bevorzugt im Bereich von 1600 dtex bis 2000 dtex.

Der Garntiter eines Multifilamentgarns ist im Rahmen der vorliegenden Erfindung die Masse eines bestimmten Multifilamentgarnabschnittes im Verhältnis zu seiner Länge (in dtex angegeben).

Ein Vorteil des vorstehend beschriebenen Aspektes der Erfindung ist, dass die resultierenden Fahrzeugluftreifen, welche als Karkass-Festigkeitsträger einen bevorzugten Polyamid-Kord mit Multifilamentgarnen wie vorstehend beschrieben umfassen, eine höhere Reifengleichförmigkeit aufweisen als Fahrzeugluftreifen, bei denen der Polyamid-Kord eine andere Gesamtfeinheit aufweist. Gleichzeitig wird der Garnverbrauch optimiert.

Ein erfindungsgemäßer Polyamid-Kord wie vorstehend beschrieben (oder wie vorstehend als bevorzugt beschrieben) kann vorteilhafterweise aus zwei oder mehreren verdrehten Multifilamentgarnen bestehen, wobei die einzelnen Multifilamente der zwei oder mehreren verdrehten Multifilamentgarnen in S-Richtung zu dem jeweiligen Multifilamentgarn verdreht wurden und zwei oder mehrere der verdrehten Multifilamentgarne in Z-Richtung zu dem Polyamid-Kord verdreht wurden.

In manchen Fällen kann aber auch ein erfindungsgemäßer Polyamid-Kord wie vorstehend beschrieben (oder wie vorstehend als bevorzugt beschrieben) vorteilhafterweise aus zwei oder mehreren verdrehten Multifilamentgarnen bestehen, wobei die einzelnen Multifilamente der zwei oder mehreren verdrehten Multifilamentgarnen in Z-Richtung zu dem jeweiligen Multifilamentgarn verdreht wurden und zwei oder mehrere der verdrehten Multifilamentgarne in S-Richtung zu dem Polyamid-Kord verdreht wurden.

Bevorzugt ist auch ein Polyamid-Kord wie vorstehend beschrieben (oder wie vorstehend als bevorzugt beschrieben), dadurch gekennzeichnet, dass
der Polyamid-Kord eine Bruchdehnung im Bereich von größer als 20 % aufweist, bevorzugt im Bereich von 21 bis 30 %, besonders bevorzugt im Bereich von 23 bis 26 %, und/oder
der Polyamid-Kord eine Zugfestigkeit im Bereich von 200 N bis 400 N aufweist, bevorzugt im Bereich von 220 N bis 300 N, besonders bevorzugt im Bereich von 250 N bis 290 N.

Ein Vorteil des vorstehend beschriebenen Aspektes der Erfindung ist, dass die resultierenden Fahrzeugluftreifen mit einem erfindungsgemäßen bevorzugten Polyamid-Kord wie vorstehend beschrieben eine noch längere Lebensdauer aufweisen als Fahrzeugluftreifen, welche als Karkass-Festigkeitsträger einen Polyamid-Kord mit geringerer Bruchdehnung oder Zugfestigkeit umfassen.

Bevorzugt ist auch ein Polyamid-Kord wie vorstehend beschrieben (oder wie vorstehend als bevorzugt beschrieben), dadurch gekennzeichnet, dass
der Polyamid-Kord eine Restschrumpfung im Bereich von 0,5 bis 2 % aufweist, bevorzugt im Bereich von 0,8 bis 2 %, besonders bevorzugt im Bereich von 0,8 bis 1,5 %, ganz besonders bevorzugt im Bereich von 0,9 bis 1,1 %, und/oder
der Polyamid-Kord eine Schrumpfung bei 180 °C im Bereich von 0,5 bis 4,5 % aufweist, bevorzugt im Bereich von 1 bis 4,5 %, besonders bevorzugt im Bereich von 2 bis 4,5 %, ganz besonders bevorzugt im Bereich von 3 bis 4 %.

Ein Vorteil des vorstehend beschriebenen Aspektes der Erfindung ist, dass die resultierenden Fahrzeugluftreifen umfassend als Karkass-Festigkeitsträger einen erfindungsgemäßen bevorzugten Polyamid-Kord wie vorstehend beschrieben eine noch größere Reifengleichförmigkeit im Vergleich mit Fahrzeugluftreifen aufweisen, welche als Karkass-Festigkeitsträger einen Polyamid-Kord mit höherer Restschrumpfung und/oder Schrumpfung bei 180 °C umfassen.

Bevorzugt ist auch ein Polyamid-Kord wie vorstehend beschrieben, dadurch gekennzeichnet, dass der Polyamid-Kord als Hauptbestandteil PA6 oder PA6.6 aufweist, bevorzugt aus PA6 oder PA6.6 besteht.

Ein Vorteil des vorstehend beschriebenen Aspektes der Erfindung ist, dass PA6.6-Korde im Vergleich mit PE-Korden besser beim Herstellungsprozess des PA6.6-Kordes verarbeitet werden können und aufgrund der vorteilhaften Materialeigenschaften des PA6.6-Kordes bessere physikalische Eigenschaften des resultierenden Fahrzeugluftreifens erreicht werden können. Dies gilt beispielsweise für Karkassenlagen in Landwirtschaftsluftreifen, in denen Polyamid-Korde anstelle von Polyethylen-Korden eingesetzt werden, da Polyamid-Korde eine höhere Bruchdehnung und eine höhere Zugfestigkeit aufweisen und somit stärker belastet werden können.

Daraus resultiert für die erfindungsgemäßen Fahrzeugluftreifen mit einem erfindungsgemäßen PA6.6-Kord wie vorstehend beschrieben eine noch größere Reifengleichförmigkeit als bei Fahrzeugluftreifen, welche als Karkass-Festigkeitsträger einen Polyamid-Kord aus anderen Materialen umfassen.

Ganz besonders bevorzugt ist ein erfindungsgemäßer Polyamid-Kord dadurch gekennzeichnet, dass der Polyamid-Kord

- eine Gesamtfeinheit von 2800 dtex aufweist,
- aus zwei verdrehten Multifilamentgarnen besteht, wobei jedes der Multifilamentgarne einen Garntiter von 1400 aufweist,
- einen Twist-Faktor im Bereich von 190 bis 210 aufweist,
- eine Restschrumpfung von 1,1% aufweist,
- eine Schrumpfung bei 180 °C von 3,9 % aufweist und
- aus PA6.6 besteht.

Vorstehend beschriebene erfindungsgemäße Polyamid-Korde können zur Herstellung von Fahrzeugluftreifen verwendet werden, wobei die hergestellten Fahrzeugluftreifen besonders vorteilhafte Eigenschaften im Vergleich zu im Stand der Technik bekannten Fahrzeugluftreifen aufweisen. Zu solchen vorteilhaften Eigenschaften gehören z.B. eine besonders hohe Reifengleichförmigkeit und/oder eine länger Lebensdauer im Vergleich zu erfindungsgemäßen Fahrzeugluftreifen, welche nicht den ganz besonders bevorzugten Polyamid-Kord wie vorstehend beschrieben umfassen.

Noch bevorzugter als der vorstehend beschriebene ganz besonders bevorzugte Polyamid-Kord ist ein erfindungsgemäßer Polyamid-Kord dadurch gekennzeichnet, dass der Polyamid-Kord

- eine Gesamtfeinheit von 3760 dtex aufweist,
- aus zwei verdrehten Multifilamentgarnen besteht, wobei jedes der Multifilamentgarne einen Garntiter von 1880 aufweist,
- einen Twist-Faktor von 190 bis 210 aufweist,
- eine Restschrumpfung von 0,9 % aufweist,
- eine Schrumpfung bei 180 °C von 3,8 % aufweist und
- aus PA6.6 besteht.

Vorstehend beschriebene erfindungsgemäße Polyamid-Korde können zur Herstellung von Fahrzeugluftreifen verwendet werden, wobei die hergestellten Fahrzeugluftreifen besonders vorteilhafte Eigenschaften im Vergleich zu im Stand der Technik bekannten Fahrzeugluftreifen aufweisen. Zu solchen vorteilhaften Eigenschaften gehören z.B. eine besonders hohe Reifengleichförmigkeit und/oder eine länger Lebensdauer im Vergleich zu erfindungsgemäßen Fahrzeugluftreifen, welche nicht einen der ganz besonders bevorzugten Polyamid-Korde wie vorstehend beschrieben umfassen.

Die Erfindung betrifft auch eine gummierte Verstärkungslage für einen Fahrzeugluftreifen umfassend einen Polyamid-Kord wie vorstehend beschrieben (oder wie vorstehend als bevorzugt beschrieben oder als ganz besonders bevorzugt beschrieben), dadurch gekennzeichnet, dass die gummierte Verstärkungslage bevorzugt eine Karkassenlage eines Fahrzeugluftreifens ist.

Die vorstehend beschriebenen vorteilhaften Aspekte eines erfindungsgemäßen Polyamid-Kords gelten auch für sämtliche Aspekte einer nachstehend beschriebenen gummierten Verstärkungslage und die nachstehend beschriebenen vorteilhaften Aspekte erfindungsgemäßer gummierter Verstärkungslagen und deren Verwendungen gelten entsprechend für sämtliche Aspekte eines vorstehend beschriebenen erfindungsgemäßen Polyamid-Kords.

Die Erfindung betrifft auch einen Fahrzeugluftreifen umfassend eine gummierte Verstärkungslage wie vorstehend beschrieben, dadurch gekennzeichnet, dass die gummierte Verstärkungslage bevorzugt eine Karkassenlage ist.

Die Erfindung betrifft auch einen Fahrzeugluftreifen umfassend einen oder mehrere Polyamid-Korde wie vorstehend beschrieben (oder wie vorstehend als bevorzugt beschrieben), dadurch gekennzeichnet, dass der eine oder einer der mehreren Polyamid-Korde bevorzugt in einem Karkass-Festigkeitsträger enthalten ist.

Die vorstehend beschriebenen vorteilhaften Aspekte eines erfindungsgemäßen Polyamid-Kords oder einer erfindungsgemäßen gummierten Verstärkungslage gelten auch für sämtliche Aspekte eines nachstehend beschriebenen Fahrzeugluftreifens und die nachstehend beschriebenen vorteilhaften Aspekte erfindungsgemäßer Fahrzeugluftreifens gelten entsprechend für sämtliche Aspekte eines vorstehend beschriebenen erfindungsgemäßen Polyamid-Kords und einer erfindungsgemäßen gummierten Verstärkungslage.

Bevorzugt ist ein erfindungsgemäßer Fahrzeugluftreifen wie vorstehend beschrieben dadurch gekennzeichnet, dass der Fahrzeugluftreifen

ein PKW-, Van-, LKW- oder Landwirtschaftsluftreifen ist, bevorzugt ein Van-, LKW- oder Landwirtschaftsluftreifen, besonders bevorzugt ein LKW- oder Landwirtschaftsluftreifen, ganz besonders bevorzugt ein Landwirtschaftsluftreifen, wobei der Fahrzeugluftreifen insbesondere ein Landwirtschaftsluftreifen mit einer Felgengröße im Bereich von 16 Zoll (ca. 40,64 cm) bis 52 Zoll (ca. 132,08 cm) ist, bevorzugt im Bereich von 24 Zoll (ca. 60,96 cm) bis 48 Zoll (ca. 121,92 cm).

Ein Vorteil des vorstehend beschriebenen Aspektes der Erfindung ist, dass insbesondere bei schwereren Fahrzeugen große Gravitationskräfte auf die verwendeten Fahrzeugluftreifen wirken und somit eher zu einer Verformung des Fahrzeugluftreifens, insbesondere zu einem Flat-Spotting führen können. Zudem haben Landwirtschaftsfahrzeuge häufig keine Stoßdämpfer an der Hinterachse, wodurch sich jede Reifenungleichförmigkeit im Landwirtschaftsluftreifen negativ auf den Fahrzeugrahmen auswirkt. Daher ist der Einsatz von erfindungsgemäßen Polyamid-Korden in einem vorstehend beschriebenen erfindungsgemäß bevorzugten Fahrzeugluftreifen besonders vorteilhaft, insbesondere der Einsatz in einen Fahrzeugluftreifen an einem Fahrzeug mit einer Felgengröße von 24 Zoll (ca. 60,96 cm) bis 48 Zoll (ca. 121,92 cm) Fahrzeuge mit den vorstehend beschriebenen Felgengrößen werden häufig für Transportaufgaben verwendet, bei denen das Temperaturniveau von 50°C überschritten wird, über dem der Schrumpfprozess des Polyamid einsetzt.

Besonders bevorzugt ist ein Fahrzeugluftreifen wie vorstehend beschrieben (oder wie vorstehend als bevorzugt beschrieben) dadurch gekennzeichnet, dass der Fahrzeugluftreifen

- eine Radialkarkasse mit 1 bis 6 Karkassenlagen, bevorzugt eine Radialkarkasse mit 2 bis 3 Karkassenlagen, umfasst.

Ein Vorteil des vorstehend beschriebenen Aspektes der Erfindung ist, dass bei erfindungsgemäßen Landwirtschaftsluftreifen 6 Karkassenlagen in der Radialkarkasse ausreichen, um trotz der bei Landwirtschaftsluftreifen üblichen Gewichtsbelastung eine lange Lebensdauer der Landwirtschaftsluftreifen zu gewährleisten. Ein weiterer Vorteil des vorstehend beschriebenen Aspektes der Erfindung ist, dass durch den Einsatz eines erfindungsgemäßen Polyamid-Kordes in einem Landwirtschaftsluftreifen 2 bis 3 Karkassenlagen in der Radialkarkasse ausreichen, um bei Landwirtschaftsluftreifen üblichen Gewichtsbelastung eine lange Lebensdauer der Landwirtschaftsluftreifen und um gleichzeitig eine noch höhere Reifengleichförmigkeit als bei Landwirtschaftsluftreifen mit mehr als 3 Karkassenlagen zu gewährleisten.

Ganz besonders bevorzugt ist ein Fahrzeugluftreifen wie vorstehend als besonders bevorzugt beschrieben dadurch gekennzeichnet, dass der Fahrzeugluftreifen zusätzlich

- einen profilierten Laufstreifen,
- einen ein-, zwei-, drei-, vier-, fünf-, sechs- oder sieben-, achtlagigen Gürtel, bevorzugt mit einem zwei-, drei-, vier-, fünf-, sechslagigen Gürtel,
und/oder
- eine den Gürtel bedeckende ein- oder mehrlagige Gürtelbandage vorzugsweise mit in Umfangsrichtung des Fahrzeugluftreifens verlaufenden Festigkeitsträgern

umfasst.

Insbesondere ganz besonders bevorzugt ist ein Fahrzeugluftreifen wie vorstehend als ganz besonders bevorzugt beschrieben dadurch gekennzeichnet, dass der Fahrzeugluftreifen, vorzugsweise ein Landwirtschaftsluftreifen,

- eine Radialkarkasse mit 2 bis 3 Karkassenlagen,
- einen zwei-, drei-, vier-, fünf- oder sechslagigen Gürtel
und
- eine Felgengröße im Bereich von 24 Zoll (ca. 60,96 cm) bis 48 Zoll (ca. 121,92 cm)

aufweist.

Die Erfindung betrifft auch ein Verfahren zur Herstellung eines oder mehrerer Polyamid-Korde, vorzugsweise eines oder mehrerer Polyamid-Korde wie vorstehend beschrieben (oder wie vorstehend als bevorzugt beschrieben), wobei das Verfahren wenigstens die Verfahrensschritte in folgender Reihenfolge umfasst:

a. Tauchen eines oder mehrerer textilen Festigkeitsträger in wenigstens ein erstes Tauchbad, welches wenigstens ein Latex und/oder mindestens ein Harz, bevorzugt in einer wässrigen Mischung, enthält, und
b. anschließendes Wärmebehandeln des einen oder der mehreren getauchten Festigkeitsträger in einem Temperaturbereich von 120 bis 260 °C, bevorzugt in einem Temperaturbereich von 140 bis 240 °C, besonders bevorzugt

**6**

in einem Temperaturbereich von 160 bis 220 °C, und gleichzeitiges Strecken des einen oder der mehreren Festigkeitsträger, sodass während des gesamten Verfahrens die eine oder die mehreren Festigkeitsträger einer Gesamtstreckung im Bereich von 0 % bis 6 % ausgesetzt wurden, bevorzugt im Bereich von 0,5 bis 6 %, besonders bevorzugt im Bereich von 0,8 bis 4 %, ganz besonders bevorzugt im Bereich von 1 bis 1,2 %,

c. Weiterverarbeiten des einen oder der mehreren wärmebehandelten Festigkeitsträger, sodass ein oder mehrere Polyamid-Korde, vorzugsweise ein oder mehrere Polyamid-Korde wie vorstehend beschrieben (oder wie vorstehend als bevorzugt beschrieben), entstehen.

Die vorstehend beschriebenen vorteilhaften Aspekte eines erfindungsgemäßen Polyamid-Kords, einer gummierten Verstärkungslage oder eines Fahrzeugluftreifens gelten auch für sämtliche Aspekte eines nachstehend beschriebenen Verfahrens zur Herstellung eines oder mehrerer Polyamid-Korde und die nachstehend beschriebenen vorteilhaften Aspekte erfindungsgemäßer Verfahren zur Herstellung eines oder mehrerer Polyamid-Korde gelten entsprechend für sämtliche Aspekte eines vorstehend beschriebenen erfindungsgemäßen Polyamid-Kords, einer gummierten Verstärkungslage oder eines Fahrzeugluftreifens.

Die Erfindung betrifft auch einen Polyamid-Kord hergestellt oder herstellbar nach einem der Verfahren zur Herstellung wie vorstehend beschrieben (oder wie vorstehend als bevorzugt beschrieben).

Der Schritt b. wird im vorstehend beschriebenen Verfahren zur Herstellung eines oder mehrerer Polyamid-Korde bevorzugt wie folgt ausgeführt werden:

b1. anschließendes Trocknen des einen oder der mehreren getauchten Festigkeitsträger in einem Temperaturbereich von 140 bis 160 °C
und
b2. anschließendes Wärmebehandeln des einen getrockneten oder der mehreren getrockneten Festigkeitsträger in einer Heißverstreckungszone zwischen 210 °C und 260 °C,

wobei während der Schritte b1. und b2. der eine oder die mehreren Festigkeitsträger so gestreckt werden, sodass während des gesamten Verfahrens die eine oder die mehreren Festigkeitsträger einer Gesamtstreckung im Bereich von 0 % bis 6 % ausgesetzt wurden, bevorzugt im Bereich von 0,5 bis 6 %, besonders bevorzugt im Bereich von 0,8 bis 4 %, ganz besonders bevorzugt im Bereich von 1 bis 1,2 %.

Im Stand der Technik ist bekannt, dass Festigkeitsträger vor der Gummierung für eine Verbesserung der Materialeigenschaften der textilen Festigkeitsträger aktiviert werden können, wobei verschiedene Tauchbäder, üblicherweise sogenannte RFL-Dips (Resorcin-Formaldehyd-Latex), verwendet werden, durch die die Festigkeitsträger getaucht werden. Dies gilt auch für erfindungsgemäße Polyamid-Korde.

Erfindungsgemäß werden die textilen Festigkeitsträger in vorstehend beschriebenen Verfahrensschritt a) vorzugsweise durch Tauchen in wenigstens einem ersten Tauchbad behandelt, wobei das Tauchbad wenigstens ein Latex enthält.

Die textilen Festigkeitsträger sind vor und nach diesem Verfahrensschritt noch ungummiert. Das Tauchbad ist bevorzugt eine wässrige Mischung, die neben Wasser und einem Latex wenigstens ein Harz, vorzugsweise ein RF-Harz, enthält. Zusätzlich kann noch Ammoniak und Formaldehyd in dem ersten Tauchbad vorliegen. Der Latex ist dabei bevorzugt ein Vinyl-Pyridin-Latex oder polymerisiertes Chloropren, besonders bevorzugt ein Vinylpyridin-Styrol-Butadien-Terpolymer als Vinyl-Pyridin-Latex.

Das Tauchen des Festigkeitsträgers in das erste Tauchbad erfolgt auf bekannte Art und Weise. Ein derartiger Behandlungsschritt wird auch als Pre-Dip bezeichnet.

Im Anschluss kann optional eine Trocknung des oder der mehreren textilen Festigkeitsträger in einer Trocknungszone folgen und anschließend werden die textilen Festigkeitsträger einer Wärmebehandlung in einer Heißverstreckungszone unterzogen, bei der die getauchten textilen Festigkeitsträger in verschiedenen Behandlungsphasen verstreckt werden. Die Summe der Verstreckungen in diesen einzelnen Behandlungsphasen und in der Trocknungszone ist dabei die sogenannte Gesamtstreckung. Im Anschluss kann eine Weiterverarbeitung der gestreckten textilen Festigkeitsträger z.B. in einer Normalisierungszone zu Polyamid-Korden geschehen.

Den Vorgang, welcher sich zumindest aus Tauchen in einem ersten Tauchbad, Wärmebehandeln und Strecken des Polyamid-Kords zusammensetzt, ist im Rahmen der vorliegenden Erfindung eine Vorbehandlung des Polyamid-Kords. Bei aus dem Stand der Technik bekannten Vorbehandlungen erfahren die vorbehandelten Korde normalerweise eine vergleichsweise hohe Gesamtstreckung. Zudem werden im Stand der Technik spezielle Temperaturprogramme bei der Vorbehandlung der Korde benutzt, um die Eigenschaften der resultierenden Korde genau einzustellen.

Überraschenderweise wurde nun festgestellt, dass sich die Verringerung der Gesamtstreckung beim Vorbehandeln eines erfindungsgemäß hergestellten Polyamid-Kords empfindlich auf dessen Restschrumpfung und die Schrumpfung bei 180 °C auswirkt. Durch die vorstehend beschriebene Verringerung der Gesamtstreckung während der Vorbehandlung der Polyamid-Korde resultieren Polyamid-Korde mit besonders niedriger Schrumpfung bei 180 °C und besonders niedriger Restschrumpfung im Vergleich zu im Stand der Technik bekannten Korden.

Ein anschließender Einbau dieser erfindungsgemäß hergestellten Polyamid-Korde in einem Fahrzeugluftreifen resultiert in einem erfindungsgemäßen Fahrzeugluftreifen mit höherer Reifengleichförmigkeit als bei Fahrzeugluftreifen mit aus dem Stand der Technik bekannten Polyamid-Korden. Daher erfüllt ein größerer Anteil produzierter Fahrzeugluftreifen mit erfindungsgemäß hergestellten Polyamid-Korden die in der Industrie geforderten Qualitätsanforderungen als Fahrzeugluftreifen mit Polyamid-Korden, welche mit aus dem Stand der Technik bekannten Verfahren hergestellt wurden. Hierdurch wird der Rohstoffverbrauch bei der Herstellung der Fahrzeugluftreifen erhöht. Gleichzeitig verbraucht ein Kraftfahrzeug mit den gleichförmigeren Fahrzeugluftreifen auch weniger Kraftstoff. Beides verringert die Umweltbelastung.

Die Erfindung betrifft auch ein Verfahren zur Herstellung

- einer gummierten Verstärkungslage wie vorstehend beschrieben, bevorzugt einer gummierten Verstärkungslage umfassend einen oder mehrere Polyamid-Korde wie vorstehend beschrieben (oder wie vorstehend als bevorzugt beschrieben)

oder

- einer gummierten Verstärkungslage, wobei das Verfahren die Verfahrensschritte a. bis c. wie vorstehend in einem Verfahren zur Herstellung eines oder mehrerer Polyamid-Korde, vorzugsweise wie vorstehend beschrieben oder wie vorstehend als bevorzugt beschrieben, definiert umfasst und anschließend den folgenden Verfahrensschritt umfasst:

   d. Gummierung des einen oder der mehreren Polyamid-Korde, vorzugsweise wie vorstehend beschrieben oder wie vorstehend als bevorzugt beschrieben, mit einer Gummierungsmischung und Weiterverarbeiten, so dass eine gummierte Verstärkungslage entsteht.

Im Folgenden werden die Bestandteile der Gummierungsmischung näher erläutert. Sämtliche Ausführungsformen gelten auch für einen erfindungsgemäßen Polyamid-Kord, der durch das erfindungsgemäße Verfahren hergestellt wurde, sowie einen erfindungsgemäßen Fahrzeugluftreifen, der den erfindungsgemäßen Polyamid-Kord in wenigstens einem Reifenbauteil aufweist. Die Bestandteile der Gummierungsmischung, insbesondere die Kautschuke, können im vulkanisierten Reifen chemisch verändert vorliegen.

Die Gummierungsmischung kann Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Gummierungsmischung ergeben.

Es können in der Gummierungsmischung noch 0 bis 70 phr, bevorzugt 0,1 bis 60 phr, zumindest eines Weichmachers vorhanden sein. Hierzu gehören sämtliche im Stand der Technik bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL; wie sie in der DE 10 2008 037714 A1 offenbart sind) oder Öle auf Basis nachwachsender Rohstoffe (wie z. B. Rapsöl, Terpenöle (z. B. Orangenöle)) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der Gummierungsmischung Flüssig-Polymere als Weichmacher eingesetzt, so gehen diese nicht als Kautschuk in die Berechnung der Zusammensetzung der Polymermatrix (phr-Berechnung) ein.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die Gummierungsmischung übliche Zusatzstoffe in üblichen Gewichtsteilen enthalten. Zu diesen Zusatzstoffen zählen

   A) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind,

   B) Aktivatoren, wie z. B. Zinkoxid und Fettsäuren (z. B. Stearinsäure),

   C) Wachse,

   D) Harze, insbesondere Klebharze, die keine Weichmacherharze sind,

   E) Methylenakzeptoren, wie Resorcin und Resorcinäquivalente, und/oder Methylendonor/Formaldehydspender, wie z. B. Hexamethoxymethylmelamin (HMMM) und/oder Hexamethylentetramin (HMT)

   F) Mastikationshilfsmittel, wie z. B. 2,2'-Dibenzamidodiphenyldisulfid (DBD) und

   G) Verarbeitungshilfsmittel, wie z.B. Fettsäuresalze, wie z.B. Zinkseifen, und Fettsäureester und deren Derivate, wie z.B. PEG-Carbonsäureester.

Die Herstellung der Gummierungsmischung und deren Anwendung auf den erfindungsgemäßen Polyamid-Kord oder einem Polyamid-Kord nach dem vorstehend beschriebenen Verfahren hergestellt erfolgt auf herkömmliche Art und Weise.

Nach der Gummierung des Polyamid-Kords und Verarbeitung des gummierten Polyamid-Kords in einem Reifenrohling wird bevorzugt eine Vulkanisation in Anwesenheit von Schwefel und/oder Schwefelspendern durchgeführt, wobei einige Schwefelspender zugleich als Vulkanisationsbeschleuniger wirken können. Des Weiteren kann die Vulkanisation in Anwesenheit von vulkanisationsbeeinflussenden Substanzen wie Vulkanisationsbeschleuniger, Vulkanisationsverzögerer und Vulkanisationsaktivatoren in üblichen Mengen durchgeführt werden, um die erforderliche Zeit und/oder die erforderliche Temperatur der Vulkanisation zu kontrollieren und die Vulkanisationseigenschaften zu verbessern.

Die vorstehend beschriebenen vorteilhaften Aspekte eines erfindungsgemäßen Polyamid-Kords, einer erfindungsgemäßen gummierten Verstärkungslage, eines erfindungsgemäßen Fahrzeugluftreifens oder eines erfindungsgemäßen Verfahrens zur Herstellung eines oder mehrerer Polyamid-Korde gelten auch für sämtliche Aspekte eines nachstehend beschriebenen Verfahrens zur Herstellung einer gummierten Verstärkungslage und die nachstehend beschriebenen vorteilhaften Aspekte erfindungsgemäßer Verfahren zur Herstellung einer gummierten Verstärkungslage gelten entsprechend für sämtliche Aspekte eines vorstehend beschriebenen erfindungsgemäßen Polyamid-Kords, einer erfindungsgemäßen gummierten Verstärkungslage, eines erfindungsgemäßen Fahrzeugluftreifens oder eines erfindungsgemäßen Verfahrens zur Herstellung eines oder mehrerer Polyamid-Korde.

Bevorzugt ist ein erfindungsgemäßes Verfahren wie vorstehend beschrieben, dadurch gekennzeichnet, dass die Gummierungsmischung

wenigstens einen Dienkautschuk, der ausgewählt ist aus der Gruppe bestehend aus natürlichem Polyisopren und/oder synthetischem Polyisopren und/oder Butadien-Kautschuk und/oder Styrol-Butadien-Kautschuk,

und

20 bis 90 phr wenigstens eines Füllstoffes ausgewählt aus der Gruppe bestehend aus Ruß und/oder Kieselsäure enthält.

Die Erfindung betrifft auch ein Verfahren zur Herstellung

- eines Fahrzeugluftreifens wie vorstehend beschrieben (oder wie vorstehend als bevorzugt beschrieben oder wie vorstehend als besonders bevorzugt beschrieben)
  oder
- eines Fahrzeugluftreifens umfassend einen oder mehrere Polyamid-Korde hergestellt oder herstellbar nach einem Verfahren zur Herstellung eines oder mehrerer Polyamid-Korde wie vorstehend beschrieben (oder wie vorstehend als bevorzugt beschrieben oder wie vorstehend als besonders bevorzugt beschrieben)
  oder
- eines Fahrzeugluftreifens, wobei das Verfahren die Verfahrensschritte a. bis d. wie vorstehend definiert und anschließend die folgenden Verfahrensschritte umfasst:
  e. Einbauen der gummierten Verstärkungslage in einen Reifenrohling und Weiterverarbeiten des Reifenrohlings zu einem Fahrzeugluftreifen.

Die vorstehend beschriebenen vorteilhaften Aspekte eines erfindungsgemäßen Polyamid-Kords, einer erfindungsgemäßen gummierten Verstärkungslage, eines erfindungsgemäßen Fahrzeugluftreifens, eines erfindungsgemäßen Verfahrens zur Herstellung eines oder mehrerer Polyamid-Korde oder eines erfindungsgemäßen Verfahren zur Herstellung einer gummierten Verstärkungslage gelten auch für sämtliche Aspekte eines nachstehend beschriebenen Verfahrens zur Herstellung eines Fahrzeugluftreifens und die nachstehend beschriebenen vorteilhaften Aspekte erfindungsgemäßer Verfahren zur Herstellung eines Fahrzeugluftreifens gelten entsprechend für sämtliche Aspekte eines vorstehend beschriebenen erfindungsgemäßen Polyamid-Kords, einer erfindungsgemäßen gummierten Verstärkungslage, eines erfindungsgemäßen Fahrzeugluftreifens eines erfindungsgemäßen Verfahrens zur Herstellung eines oder mehrerer Polyamid-Korde oder eines erfindungsgemäßen Verfahren zur Herstellung einer gummierten Verstärkungslage.

Die vorstehend beschriebenen vorteilhaften Aspekte eines erfindungsgemäßen Polyamid-Kords, einer erfindungsgemäßen gummierten Verstärkungslage, eines erfindungsgemäßen Fahrzeugluftreifens, eines erfindungsgemäßen Verfahren zur Herstellung einer gummierten Verstärkungslage, eines erfindungsgemäßen Verfahrens zur Herstellung eines Fahrzeugluftreifens oder eines erfindungsgemäßen Verfahrens zur Herstellung eines oder mehrerer Polyamid-Korde gelten auch für sämtliche Aspekte der nachstehend beschriebenen Verwendungen.

Die Erfindung betrifft auch eine Verwendung einer gummierten Verstärkungslage wie vorstehend beschrieben als Karkassenlage eines Fahrzeugluftreifens.

Die Erfindung betrifft auch eine Verwendung eines Fahrzeugluftreifens wie vorstehend beschrieben (oder wie vorstehend als bevorzugt oder besonders bevorzugt beschrieben) als PKW-, Van-, LKW- oder Landwirtschaftsluftreifen, bevorzugt als Van-, LKW- oder Landwirtschaftsluftreifen, besonders bevorzugt als LKW- oder Landwirtschaftsluftreifen, ganz besonders bevorzugt als Landwirtschaftsluftreifen.

Die Erfindung soll nun anhand der nachstehenden Beispiele näher erläutert werden.

Messmethoden:

1. Bruchdehnung

Die Ergebnisse wurden in Anlehnung an die Methode DIN 53504 ermittelt.

2. Zugfestigkeit

Die Ergebnisse wurden in Anlehnung an die Methode DIN 53504 ermittelt.

3. "Disc fatigue test"

Die Ergebnisse wurden in Anlehnung an die Methode ASTM D 6588 auf einem geeigneten Messgerät ermittelt, z. B. von den Herstellern Viscosuisse AG oder Anlagen- und Maschinenbau W.. Bei der Messung für die in Tabelle 1 angegebenen Daten wurden die Probekörper in 15 000 000 Zyklen von einer minimalen Dehnung von 5,1 % bis zu maximalen Dehnung von 9.9 % gedehnt. Bei der Messung für die in Tabelle 2 angegebenen Daten wurden die Probekörper in 15 000 000 Zyklen von einer minimalen Dehnung von 1,4 % bis zu maximalen Dehnung von 13,5 % gedehnt.

4. Reifengleichförmigkeit

Die Ergebnisse wurden mithilfe der "Radial Run Out"-Methode ermittelt. Hierbei wird der Fahrzeugluftreifen, nachdem er auf eine Felge aufgesetzt wurde, unter Druck (2 bar) gesetzt und um die Rotationsachse der Felge gedreht. Beim Rotieren wird durch Messen der Oberflächenstollen im Zentrum des Laufstreifens des Fahrzeugluftreifens die genaue Reifenumfangsform gemessen. Hierbei wird der Verlauf der Aussenkontur mittels einer FFT-Analyse (Fourier-Transformation-Analyse) untersucht. Der ermittelte Betrag der ersten Harmonischen wird "1st Harmonic" genannt. Mithilfe der ersten Harmonischen wird anschließend der geometrische Mittelpunkt der so gemessenen Reifenumfangsform ermittelt und die Abweichung des ermittelten geometrischen Mittelpunkts von der Rotationsachse der Felge berechnet. Diese Abweichung gibt eine quantitative Aussage über die Reifengleichförmigkeit.

Herstellung der verschiedenen Polyamid-Korde und Fahrzeugluftreifen

Beispiel 1 (Vergleichsexperiment V1): Nicht erfindungsgemäßer Polyamid-Kord zur Verwendung als Karkass-Festigkeitsträger mit einer Gesamtfeinheit von 2880 dtex

Korde hergestellt aus jeweils zwei PA6.6-Garnen mit einer Gesamtfeinheit von 2880 dtex (1440 x 2) mit einer Garndrehung von 290 wurden durch einen Pre-Dip enthaltend 46,49 Gew.-Anteile Wasser, 45,67 Gew.-Anteile Vinyl Pyridin Latex und 2,25 Gew.-Anteile Ammoniak, 3,14 Gew.-Anteile Penacolite-Harz (kommerziell erhältliche wässrige Lösung mit 75 Gew.-% Penacolite-Harz als Resorcin-Formalin-Reaktionsprodukt), 0,17 Gew.-Anteile einer kommerziell erhältlichen wässrigen NaOH-Lösung (50 Gew.-% NaOH) und 2,28 Gew.-Anteile Formaldehyde (kommerziell erhältliche Lsg. mit 37 Gew.-%) getaucht. Anschließend wurden die PA6.6-Korde für 30 bis 120 Sekunden zwischen 140 °C und 160 °C getrocknet und anschließend in einer Heißverstreckungszone zwischen 210 °C und 260 °C wärmebehandelt. In der Normalisierungszone wurden die heißverstreckten PA6.6-Korde auf Raumtemperatur abgekühlt. Die Gesamtstreckung bei der Vorbehandlung war 7 %.

Beispiel 2 (Experimente E1 bis E4) Polyamid-Kord zur Verwendung als Karkass-Festigkeitsträger mit einer Gesamtfeinheit von 2880 dtex

Korde hergestellt aus jeweils zwei PA6.6-Garnen mit einer Gesamtfeinheit von 2880 dtex (1440 x 2) mit verschiedenen Garndrehungen (siehe Tabelle 1) wurden durch einen Pre-Dip enthaltend 46,49 Gew.-Anteile Wasser, 45,67 Gew.-Anteile Vinyl Pyridin Latex und 2,25 Gew.-Anteile Ammoniak, 3,14 Gew.-Anteile Penacolite-Harz (kommerziell erhältliche wässrige Lösung mit 75 Gew.-% Penacolite-Harz als Resorcin-Formalin-Reaktionsprodukt), 0,17 Gew.-Anteile einer kommerziell erhältlichen wässrigen NaOH-Lösung (50 Gew.-% NaOH) und 2,28 Gew.-Anteile Formaldehyd (kommerziell erhältliche Lsg. mit 37 Gew.-%) getaucht. Anschließend wurden die PA6.6-Korde für 30 bis 120 Sekunden zwischen 140 °C und 160 °C getrocknet und anschließend in einer Heißverstreckungszone zwischen 210 °C und 260 °C wärmebehandelt. In der Normalisierungszone wurden die heißverstreckten PA6.6-Korde auf Raumtemperatur abgekühlt. Die Gesamtstreckung bei der Vorbehandlung war 1,2 %.

Beispiel 3 (Experiment E5): Erfindungsgemäßer Polyamid-Kord zur Verwendung als Karkass-Festigkeitsträger mit einer Gesamtfeinheit von 3760 dtex

Korde hergestellt aus jeweils zwei PA6.6-Garnen mit einer Gesamtfeinheit von 3760 dtex (1880 x 2) mit einer Garndrehung von 335 tpm wurden durch einen Pre-Dip enthaltend 46,49 Gew.-Anteile Wasser, 45,67 Gew.-Anteile Vinyl Pyridin Latex und 2,25 Gew.-Anteile Ammoniak, 3,14 Gew.-Anteile Penacolite-Harz (kommerziell erhältliche wässrige Lösung mit 75 Gew.-% Penacolite-Harz als Resorcin-Formalin-Reaktionsprodukt), 0,17 Gew.-Anteile einer kommerziell erhältlichen wässrigen NaOH-Lösung (50 Gew.-% NaOH) und 2,28 Gew.-Anteile Formaldehyde (kommerziell erhältliche Lsg. mit 37 Gew.-%) getaucht. Anschließend wurden die PA6.6-Korde für 30 bis 120 Sekunden zwischen 140 °C und 160 °C getrocknet und anschließend in einer Heißverstreckungszone zwischen 210 °C und 260 °C wärmebehandelt. In der Normalisierungszone wurden die heißverstreckten PA6.6-Korde auf Raumtemperatur abgekühlt. Die Gesamtstreckung bei der Vorbehandlung war 1,2 %.

Bei sämtlichen PA6.6-Korden wurden die Verfahrensschritte der Trocknung in der Trocknungszone und des Wärmebehandelns wie der fachkundigen Person bekannt ausgeführt. Die Temperatur in der Trocknungszone oder in der Normalisierungszone wurde in allen vorstehenden Experimenten nicht variiert. Die auf den PA6.6-Polyamid-Korden ausgeübte Temperatur in der Heißverstreckungszone wurde hingegen so eingestellt, dass die Eigenschaften, wie beispielsweise Zugfestigkeit, Bruchdehnung und die Schrumpfung bei 180 °C des Kords nicht negative beeinflusst wurden. Die Gesamtstreckung der Vorbehandlung ist dabei die Summe der einzelnen Verstreckungen in der Trocknungszone, Heißverstreckungszone oder Normalisierungszone.

Herstellung der Probekörper für den "Disc fatigue test"

Die jeweiligen auf Raumtemperatur abgekühlten PA6.6-Korde wurden nach ihrer Herstellung wie vorstehend beschrieben mit einer unvulkanisierten im Verkehr üblichen Gummierungsmischung gummiert. Die Gummierung erfolgt, in dem die Korde auf bzw. zwischen kalandrierte dünne Gummiplatten der Gummierungsmischung gelegt und anschließend der gesamte Probekörper in der Heizpresse zusammengedrückt wird.

Herstellung der Fahrzeugluftreifen

Die wärmebehandelten PA6.6-Polyamid-Korde wurden mit einer unvulkanisierten im Verkehr üblichen Gummierungsmischung gummiert und anschließend auf dem Fachmann bekannte Weise mit den noch benötigten Reifenbauteilen zu einem Fahrzeugluftreifen weiterverarbeitet. Die resultierenden Fahrzeugluftreifen wurden anschließend wie vorstehend in der entsprechenden Messmethode beschrieben auf ihre Reifengleichförmigkeit getestet.

Ergebnisse:

Die Messergebnisse der Untersuchung erfindungsgemäßer und nicht-erfindungsgemäßer Polyamid-Korde mit unterschiedlichen Gesamtstreckungen und mit gleichen Garnfeinheiten bei der Vorbehandlung sind in der nachstehenden Tabelle 1 gezeigt:

Tabelle 1: Experimentelle Daten der erfindungsgemäß (Exp. E3 und Exp. E4) und nicht erfindungsgemäß (Vgl. Exp. V1, Exp. E1 und Exp. E2) hergestellten Polyamid-Korde und Testergebnisse der mit den Polyamid-Korden hergestellten technischen Gummiartikeln (Probekörper und Fahrzeugluftreifen).

| Eigenschaft | Einheit | Vgl.-Exp. V1 | Exp. E1 | Exp. E2 | Exp. E3 | Exp. E4 |
|---|---|---|---|---|---|---|
| | | Nicht erfind.-gemäß | | | Erfind.-gemäß | Erfind.-gemäß |
| **Herstellung des Polyamid-Kords** | | | | | | |
| Gesamtstreckung bei der Vorbehandlung | % | 7 | 1,2 | 1,2 | 1,2 | 1,2 |

(fortgesetzt)

| | Einheit | Vgl.-Exp. V1 | Exp. E1 | Exp. E2 | Exp. E3 | Exp. E4 |
|---|---|---|---|---|---|---|
| **Polyamid-Kord** | | | | | | |
| Herstellungsmaterial | --- | PA6.6 | PA6.6 | PA6.6 | PA6.6 | PA6.6 |
| Garnfeinheit | dtex | 1400 | 1400 | 1400 | 1400 | 1400 |
| Anzahl Garne | --- | 2 | 2 | 2 | 2 | 2 |
| Gesamtfeinheit | dtex | 2800 | 2800 | 2800 | 2800 | 2800 |
| Garndrehung | tpm | 290 | 300 | 350 | 370 | 390 |
| Twist-Faktor | --- | 153 | 159 | 185 | 196 | 206 |
| Bruchdehnung | % | 21 | 24 | 25 | 24 | 26 |
| Zugfestigkeit | N | 227 | 228 | 224 | 223 | 221 |
| Schrumpfung bei 180 °C | % | 4,8 | 3,4 | 3,6 | 3,9 | 3,7 |
| Restschrumpfung | % | 2,3 | 0,9 | 0,9 | 1,1 | 0,9 |
| | | | | | | |
| **Probekörper** | | | | | | |
| "Disc fatigue test" (relative Werte*) Max. Dehn.: 9,9 % Min. Dehn.: 5,1 % | % | 100 | 113 | 111 | 109 | 111 |
| | | | | | | |
| **Fahrzeugluftreifen** | | | | | | |
| Anzahl Radialkarkassen | - | - | - | - | 2 | - |
| Reifengleichförmigk eit ("1st Harmonic")** | mm | nicht getestet | nicht getestet | nicht getestet | 0,18 | nicht getestet |
| * Der in Tabelle 1 für Vergl.-Exp. V1 gemessene Wert wurde auf 100% normiert und die Verbesserung der Werte der erfindungsgemäßen Polyamid-Korde im Vergleich zu dem normierten Wert des Vergl.-Exp. V1 angegeben ** Gemessen wurde die Abweichung zwischen dem ermittelten geometrischen Mittelpunkt der Reifenumfangsform des hergestellten Fahrzeugluftreifens und der Rotationsachse des | | | | | | |

Rades, auf dem der Fahrzeugluftreifen in der Messung montiert wurde (siehe Messmethode "Reifengleichförmigkeit")

Es kann Tabelle 1 entnommen werden, dass durch eine Verringerung der Gesamtstreckung bei der Vorbehandlung von 7% auf 1,2% eine signifikante Verringerung der Restschrumpfung und der Schrumpfung bei 180 °C erzielt werden kann. Dies hat nicht nur zur Folge, dass bessere Ergebnisse im "Disc fatigue test" sondern auch Fahrzeugluftreifen mit einer erhöhten Gleichförmigkeit erzielt werden können (s. letzten drei Zeilen in Tabelle 1). Insbesondere zeigt das Ergebnis des Fahrzeugluftreifens mit einem erfindungsgemäßen Polyamid-Kord mit einem Twist-Faktor von 196, dass durch die vorstehend beschriebene Herstellungsmethode Fahrzeugluftreifens mit außerordentlicher Reifengleichförmigkeit (vgl. 0,18 mm, letzte Zeile in Tabelle 1) hergestellt werden können.

Zudem lag der Anteil an hergestellten Fahrzeugluftreifen, welcher eine vorstehend beschriebene Abweichung von weniger als 1,25 mm hat, deutlich über 90% (Messergebnisse nicht in Tabelle 1 angezeigt).

Die Messergebnisse der Untersuchung erfindungsgemäßer Polyamid-Korde mit gleicher Gesamtstreckung bei der Vorbehandlung und unterschiedlichen Garnfeinheiten sind in der nachstehenden Tabelle 2 gezeigt:

Tabelle 2: Experimentelle Daten der erfindungsgemäßen Polyamid-Korde (Exp. E3 - E5) mit verschiedenen Twist-Faktoren und Testergebnisse der mit den erfindungsgemäßen Polyamid-Korden hergestellten technischen Gummiartikeln (Probekörper und Fahrzeugluftreifen)

| Eigenschaft | Einheit | Exp. E1 | Exp. E2 | Exp. E3 | Exp. E4 | Exp. E5 |
|---|---|---|---|---|---|---|
| | | | | Erfind.-gemäß | Erfind.-gemäß | Erfind.-gemäß |
| **Herstellung des Polyamid- Kords** | | | | | | |
| Gesamtstreckung bei der Vorbehandlung | % | 1,2 | 1,2 | 1,2 | 1,2 | 1,2 |
| | | | | | | |
| **Polyamid- Kord** | | | | | | |
| Herstellungsmaterial | --- | PA6.6 | PA6.6 | PA6.6 | PA6.6 | PA6.6 |
| Garnfeinheit | dtex | 1400 | 1400 | 1400 | 1400 | 1880 |
| Anzahl Garne | --- | 2 | 2 | 2 | 2 | 2 |
| Gesamtfeinheit | dtex | 2800 | 2800 | 2800 | 2800 | 3760 |
| Garndrehung | tpm | 300 | 350 | 370 | 390 | 335 |
| Twist-Faktor | --- | 159 | 185 | 196 | 206 | 205 |
| Bruchdehnung | % | 24 | 25 | 24 | 26 | 26 |
| Zugfestigkeit | N | 228 | 224 | 223 | 221 | 285 |
| | **Einheit** | **Exp. E1** | **Exp. E2** | **Exp. E3** | **Exp. E4** | **Exp. E5** |
| Schrumpfung bei 180 °C | % | 3,4 | 3,6 | 3,9 | 3,7 | 3,8 |
| Restschrumpfung | % | 0,9 | 0,9 | 1,1 | 0,9 | 0,9 |
| | | | | | | |
| **Probekörper** | | | | | | |
| "Disc fatigue test" (relative Werte*) Max. Dehn.: 13,5 % Min. Dehn.: 1,4 % | % | nicht gemessen | 100 | 136 | 146 | 141 |
| | | | | | | |
| **Fahrzeugluftreifen** | | | | | | |
| Anzahl Radialkarkassen | - | - | - | 2 | - | - |
| Reifengleichförmigk eit ("1st Harmonic") ** | mm | nicht getestet | nicht getestet | 0,18 | nicht getestet | nicht getestet |
| * Der in Tabelle 2 für Exp. E2 gemessene Wert wurde auf 100% normiert und die Verbesserung der Werte der verbleibenden erfindungsgemäßen Polyamid-Korde in Tabelle 2 im Vergleich zu dem normierten Wert des Exp. E2 angegeben ** Gemessen wurde die Abweichung zwischen dem ermittelten geometrischen Mittelpunkt der Reifenumfangsform des hergestellten Fahrzeugluftreifens und der Rotationsachse des Rades, auf dem der Fahrzeugluftreifen in der Messung montiert wurde (siehe Messmethode "Reifengleichförmigkeit") | | | | | | |

Es kann Tabelle 2 entnommen werden, dass durch einer Erhöhung des Twist-Faktors bei Einstellung der neuen Herstellungsparametern eines erfindungsgemäßen Herstellungsverfahrens eine signifikante Verbesserung bei den Ergebnisse im "Disc fatigue test" als auch bei der Reifengleichförmigkeit erzielt werden können (s. letzten drei Zeilen in Tabelle 2). Die Testbedingungen des "Disc fatigue test", mit denen die Ergebnisse in Tabelle 2 ermittelt wurden, unterscheiden sich wie bereits vorstehend erläutert dadurch, dass die Bedingungen aggressiver waren (maximale Dehnung war bei 13,5 % und minimale Dehnung war bei 1,4 %) als die Testbedingungen des "Disc fatigue test", mit denen die Ergebnisse in Tabelle 1 ermittelt wurden. Die Testbedingungen, wie sie für die Bestimmung der Messwerte in Tabelle 2 verwendet wurden, simulieren die realen Anforderungen eines Polyamid-Kordes beim Einsatz in einem Landwirtschaftsluftreifen besser als die Testbedingungen des "Disc fatigue test", mit denen die Ergebnisse in Tabelle 1 ermittelt wurden. Von den Messergebnissen des "Disc fatigue test" in Tabelle 2 kann daher geschlossen werden, dass erfindungsgemäße Polyamid-Korde mit einem Twist-Faktor im Bereich von 190 bis 210 vorteilhafter für Luftreifen sind, welche in Fahrzeugen mit schweren Lasten eingesetzt werden, insbesondere in Landwirtschaftsluftreifen eingesetzt werden. Dabei wird mit Polyamid-Korden mit einem Twist-Faktor von unter 190 vergleichen.

Die Gesamtstreckung bei der Vorbehandlung in sämtlichen Beispielen in Tabelle 2 lag bei 1,2%. Bei dem hergestellten Fahrzeugluftreifen wurde eine Abweichung des ermittelten geometrischen Mittelpunktes der Laufflächenkontur des hergestellten Fahrzeugluftreifens von dem Mittelpunkt des Wulstkreises der ersten radialen Harmonischen von weniger als 1,25 mm gemessen.

Zudem lag der Anteil an hergestellten Fahrzeugluftreifen, welcher eine vorstehend beschriebene Abweichung von weniger als 1,25 mm hat, deutlich über 90% (Messergebnisse nicht in Tabelle 2 angezeigt).

## Patentansprüche

1. Polyamid-Kord zur Verwendung als Karkass-Festigkeitsträger in einem Fahrzeugluftreifen, wobei

   der Polyamid-Kord eine Restschrumpfung im Bereich von 0 bis 2 % und eine Schrumpfung bei 180 °C im Bereich von 0 bis 4,5 % aufweist, wobei die Restschrumpfung des Polyamid-Kords und die Schrumpfung bei 180°C des Polyamid-Kords nach ASTM D 885 bestimmt sind,
   **dadurch gekennzeichnet, dass**
   der Polyamid-Kord einen Twist-Faktor im Bereich von 190 bis 250 aufweist, wobei sich der Twist-Faktor nach folgender Formel berechnet: $T_F = N_{Garndrehung} \times ((N_{Garne} \times M_{Garnfeinheit}) / 10000)^{1/2}$ wobei $N_{Garndrehung}$ = Anzahl Drehungen der Garne umeinander pro Meter Kord [tpm], $N_{Garne}$ = Anzahl der Garne des Kords, und $M_{Garnfeinheit}$ = Masse von 10000 Meter Garn [dtex].

2. Polyamid-Kord nach Anspruch 1, **dadurch gekennzeichnet, dass** der Polyamid-Kord

   - eine Gesamtfeinheit im Bereich von 940 dtex bis 6000 dtex aufweist
   und/oder
   - aus zwei, drei, vier oder mehr als vier verdrehten Multifilamentgarnen besteht, wobei jedes der Multifilamentgarne einen Garntiter im Bereich von 1000 dtex bis 3000 dtex aufweist.

3. Polyamid-Kord nach Anspruch 1 oder Anspruch 2, **dadurch gekennzeichnet, dass** der Polyamid-Kord einen Twist-Faktor im Bereich von 190 bis 210 aufweist.

4. Polyamid-Kord nach einem der Ansprüche 1 bis 3, **dadurch gekennzeichnet, dass** der Polyamid-Kord

   - eine Gesamtfeinheit von 2800 dtex aufweist,
   - aus zwei verdrehten Multifilamentgarnen besteht, wobei jedes der Multifilamentgarne einen Garntiter von 1400 aufweist,
   - einen Twist-Faktor im Bereich von 190 bis 210 aufweist,
   - eine Restschrumpfung von 1,1% aufweist,
   - eine Schrumpfung bei 180 °C von 3,9 % aufweist
   und
   - aus PA6.6 besteht.

5. Polyamid-Kord nach einem der Ansprüche 1 bis 3, **dadurch gekennzeichnet, dass** der Polyamid-Kord

   - eine Gesamtfeinheit von 3760 dtex aufweist,
   - aus zwei verdrehten Multifilamentgarnen besteht, wobei jedes der Multifilamentgarne einen Garntiter von 1880 aufweist,
   - einen Twist-Faktor von 190 bis 210 aufweist,
   - eine Restschrumpfung von 0,9 % aufweist,
   - eine Schrumpfung bei 180 °C von 3,8 % aufweist
   und

- aus PA6.6 besteht.

6. Fahrzeugluftreifen umfassend einen oder mehrere Polyamid-Korde nach einem der Ansprüche 1 bis 5.

7. Fahrzeugluftreifen nach Anspruch 6, **dadurch gekennzeichnet, dass** der Fahrzeugluftreifen ein Landwirtschaftsluftreifen ist.

8. Fahrzeugluftreifen nach Anspruch 6 oder Anspruch 7, **dadurch gekennzeichnet, dass** der Fahrzeugluftreifen eine Radialkarkasse mit 1 bis 6 Karkassenlagen umfasst.

**Claims**

1. Polyamide cord for use as carcass strength member in a pneumatic vehicle tyre, wherein
the polyamide cord has a residual shrinkage in the range from 0% to 2% and a shrinkage at 180°C in the range from 0% to 4.5%, where the residual shrinkage of the polyamide cord and the shrinkage at 180°C of the polyamide cord are determined to ASTM D 885,
**characterized in that**
the polyamide cord has a twist factor in the range from 190 to 250, where the twist factor is calculated by the following formula:

$$T_F = N_{yarn\ twist} \times ((N_{yarns} \times M_{linear\ yarn\ density})/10\ 000)^{1/2}$$

where $N_{yarn\ twist}$ = number of twists of the yarns around one another per meter of cord [tpm], $N_{yarns}$ = number of yarns in the cord, and $M_{linear\ yarn\ density}$ = mass of 10 000 meters of yarn [dtex].

2. Polyamide cord according to Claim 1, **characterized in that** the polyamide cord

- has a total linear density in the range from 940 dtex to 6000 dtex
and/or
- consists of two, three, four or more than four twisted multifilament yarns, where each of the multifilament yarns has a linear yarn density in the range from 1000 dtex to 3000 dtex.

3. Polyamide cord according to Claim 1 or Claim 2, **characterized in that** the polyamide cord has a twist factor in the range from 190 to 210.

4. Polyamide cord according to any of Claims 1 to 3, **characterized in that** the polyamide cord

- has a total linear density of 2800 dtex,
- consists of two twisted multifilament yarns, each of the multifilament yarns having a linear yarn density of 1400,
- has a twist factor in the range from 190 to 210,
- has a residual shrinkage of 1.1%,
- has a shrinkage at 180°C of 3.9%
and
- consists of PA6.6.

5. Polyamide cord according to any of Claims 1 to 3, **characterized in that** the polyamide cord

- has a total linear density of 3760 dtex,
- consists of two twisted multifilament yarns, each of the multifilament yarns having a linear yarn density of 1880,
- has a twist factor of 190 to 210,
- has a residual shrinkage of 0.9%,
- has a shrinkage at 180°C of 3.8%
and
- consists of PA6.6.

6. Pneumatic vehicle tyre comprising one or more polyamide cords according to any of Claims 1 to 5.

**7.** Pneumatic vehicle tyre according to Claim 6, **characterized in that** the pneumatic vehicle tyre is a pneumatic agricultural tyre.

**8.** Pneumatic vehicle tyre according to Claim 6 or Claim 7, **characterized in that** the pneumatic vehicle tyre comprises a radial carcass having 1 to 6 carcass plies.


**Revendications**

**1.** Cordon en polyamide destiné à être utilisé comme renfort de carcasse dans un pneumatique de véhicule, le cordon en polyamide comportant un retrait résiduel dans la gamme allant de 0 à 2 % et un retrait à 180 °C dans la gamme allant de 0 à 4,5 %, le retrait résiduel du cordon en polyamide et le retrait à 180 °C du cordon en polyamide étant déterminés conformément à ASTM D 885,
**caractérisé en ce que**
le cordon en polyamide présente un facteur de torsion dans la gamme allant de 190 à 250, le facteur de torsion étant calculé selon la formule suivante : $T_F = N_{Torsion\ de\ fil} \times ((N_{Fils} \times M_{Finesse\ de\ fil}) / 10000)^{1/2}$ où $N_{Torsion\ de\ fil}$ = nombre de tours des fils les uns autour des autres par mètre de cordon [tpm], $N_{Fils}$ = nombre de fils dans le cordon, et $M_{Finesse\ de\ fil}$ = masse de 10000 mètres de fil [dtex].

**2.** Cordon en polyamide selon la revendication 1, **caractérisé en ce que** le cordon en polyamide

- présente une finesse totale dans la gamme allant de 940 dtex à 6000 dtex et/ou
- comprend deux, trois, quatre ou plus de quatre fils multi-filaments torsadés, chacun des fils multi-filaments ayant un titre de fil dans la gamme allant de 1000 dtex à 3000 dtex.

**3.** Cordon en polyamide selon la revendication 1 ou la revendication 2, **caractérisé en ce que** le cordon en polyamide a un facteur de torsion dans la gamme allant de 190 à 210.

**4.** Cordon en polyamide selon l'une des revendications 1 à 3, **caractérisé en ce que** le cordon en polyamide

- présente une finesse totale de 2800 dtex,
- comprend deux fils multi-filaments torsadés, chacun des fils multi-filaments présentant un titre de fil de 1400,
- présente un facteur de torsion dans la gamme allant de 190 à 210,
- présente un retrait résiduel de 1,1 %,
- présente un retrait à 180 °C de 3,9 %
et
- est en PA6.6.

**5.** Cordon en polyamide selon l'une des revendications 1 à 3, **caractérisé en ce que** le cordon en polyamide

- présente une finesse totale de 3760 dtex,
- comprend deux fils multi-filaments torsadés, chacun des fils multi-filaments présentant un titre de fil de 1880,
- présente un facteur de torsion de 190 à 210,
- présente un retrait résiduel de 0,9 %,
- présente un retrait à 180 °C de 3,8 %
et
- est en PA6.6.

**6.** Pneumatique de véhicule comprenant un ou plusieurs cordons en polyamide selon l'une des revendications 1 à 5.

**7.** Pneumatique de véhicule selon la revendication 6, **caractérisé en ce que** le pneumatique de véhicule est un pneumatique agricole.

**8.** Pneumatique de véhicule selon la revendication 6 ou 7, **caractérisé en ce que** le pneumatique de véhicule comprend une carcasse radiale pourvue de 1 à 6 nappes de carcasse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012108523 A1
- US 3614864 A
- US 20110056607 A1
- EP 2394822 A1
- EP 0374356 A
- EP 0448901 A
- EP 2589619 A1
- DE 102008037714 A1

**In der Beschreibung aufgeführte Nicht-Patentliteratur**

- **SOGHRA RAMAZANI ; MOHAMMAD MORSHED ; MOHAMMAD GHANE.** Effect of service temperature on structure and mechanical properties of polyamide 6 & 66 tyre cords. *Journal of Polymer Research,* Juli 2011, vol. 18 (4), 781-792
- **J. SCHNETGER.** Lexikon der Kautschuktechnik. Hüthig Buch Verlag, 1991, 42-48